# EUROPEAN PATENT SPECIFICATION

(11) **EP 3 875 816 B1**
(45) Date of publication and mention of the grant of the patent: **14.09.2022**
(21) Application number: 21160565.4
(22) Date of filing: 03.03.2021
(51) Int. Cl.: F16K 17/04, F16K 17/06, F16K 37/00

(54) **CALIBRATION METHOD OF A PRESSURE-LIMITING VALVE**
VERFAHREN ZUR KALIBRIERUNG EINES DRUCKBEGRENZUNGSVENTILS
PROCÉDÉ D'ÉTALONNAGE D'UNE SOUPAPE DE LIMITATION DE PRESSION

(30) Priority: 03.03.2020 IT 202000004444
(43) Date of publication of application: 08.09.2021
(73) Proprietor: MASMEC S.p.A., 70026 Modugno (IT)
(72) Inventor: MAGNIFICO, Leonardo, 70026 MODUGNO (BA) (IT); CARBONE, Francesco, 70026 MODUGNO (BA) (IT); AMBRUOSI, Giancarlo, 70026 MODUGNO (BA) (IT); CARUSO, Corrado, 70026 MODUGNO (BA) (IT)
(74) Representative: Bongiovanni, Simone

(56) References cited:
- EP-A1- 3 480 565
- EP-B1- 3 480 565
- US-A- 3 042 075
- US-A- 3 554 223
- US-A- 4 464 931

## Description

### CROSS-REFERENCE TO RELATED APPLICATIONS

This patent application claims priority from Italian patent application no. 102020000004444 filed on 03/03/2020.

### TECHNICAL FIELD

The present invention relates to a calibration method of a pressure-limiting valve.

### BACKGROUND ART

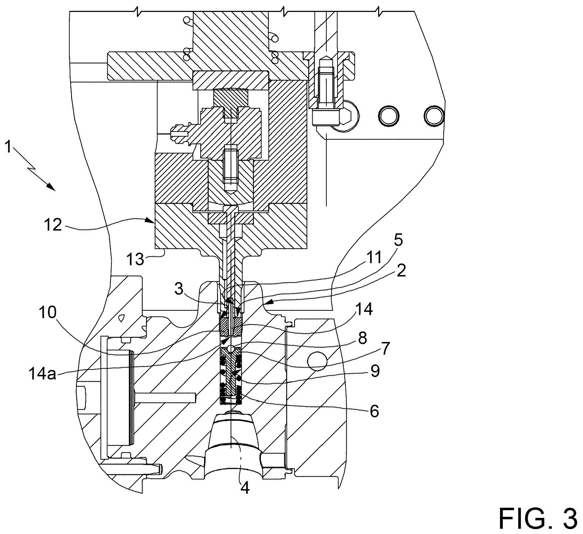

Figure 3 illustrates a calibration method according to the prior art of a pressure-limiting valve 1 (hereafter also indicated as valve 1) of known type. In particular, the main components of the valve 1 will be described in order to illustrate the known calibration method.

Specifically, the valve 1 comprises a valve body 2, provided with a central hole 3 which extends along an axis 4. The central hole 3 defines, at a first end thereof, an opening 5 and, at a second end, a valve seat 6; furthermore, the valve seat 6 houses a movable element 7, which comprises an elongated portion coaxial with the axis 4 (needle) and is provided, at an enlarged end thereof, facing the opening 5, with a recess, adapted to contain a ball 8 (for example, of steel). The valve seat 6 further houses a spring 9, arranged coaxial with the axis 4 and provided with a first end, arranged in contact with a bottom wall of the valve seat 6, and with a second end, arranged in contact with the enlarged portion of the movable element 7.

The valve 1 further comprises a cylindrical abutment seat 10, which is arranged in the central hole 3 and has a central portion defining a channel 11 coaxial with the axis 4.

In particular, according to the known methods, the cylindrical seat 10 is implanted at a preset height inside the central hole 3, so that the spring 9 assumes a preset compression value and pushes the ball 8 against the cylindrical abutment seat 10 closing the channel 11 with a thrust force F equal to a calibration value Ft.

Such operation is carried out by means of a calibration tool 12, which is provided with a punch 13 which penetrates in the opening 5 and abuts on the cylindrical abutment seat 10 displacing it axially.

In this way, the spring 9 is compressed by effect of a thrust force Fₛ, applied by the cylindrical abutment seat 10 until reaching a height such that the force F corresponds to the desired objective calibration force value Fₜ so that the valve 1 opens.

In order to control the calibration force value Fₜ, this has to be measured in a direct manner; usually, the measurement takes place by using a tip 14a, mounted coaxially in the punch 13, which presses on the ball 8.

However, in known control methods, not all the boundary conditions are considered, *i*.*e*. the variables interposed between the calibration force Ft of the spring and the actual opening pressure, such as for example the tolerance on the seat angle of the sealing, surface finishes of the sealing surfaces. This variability does not allow achieving a sufficient tolerance on the actual opening pressure, since a percentage of the calibration force Ft is reserved to the uncertainty on the boundary conditions.

Alternatively, the measurement of the opening pressure can be carried out in a direct manner by supplying a fluid under pressure to the valve.

Also in such case, the measurement of the force is crucial since the dynamic of the valve is strongly affected by the flow rate of fluid flowing through it; furthermore, the flow rate of fluid cannot be determined using a simple fixed orifice, since the flow rate depends on the opening pressure. An orifice defined for generating a flow rate to the target opening pressure will generate a much higher flow rate in the first pressure measurements, when the valve has not yet been calibrated.

Flow rate values above a certain limit value cause an uncontrolled dynamic on the valve which makes the static and precise measurement of the opening pressure impossible and which has stressful consequences on the components which compose it. In fact, uncontrolled openings and closings occur and the internal ball starts bouncing and hitting the seat, undergoing damage.

US 4 464 931 A also discloses a known method of calibration of a valve.

To summarise, at the state of the art there are no reliable methods for carrying out the calibration of the valve in stable conditions.

### DISCLOSURE OF INVENTION

The technical problem is thus to calibrate the valve with the direct method, *i*.*e*. supplying fluid under pressure and, ensuring a stable process, enabling the valve to open in steady state, so as to ensure high precision, accuracy and replicability in achieving the target opening pressure and so as to preserve the integrity of the valve.

According to the present invention, a calibration method of a valve is provided, as claimed in the attached claims.

### BRIEF DESCRIPTION OF THE DRAWINGS

In order to better understand the present invention, a preferred embodiment thereof is now described, by way of mere non-limiting example, with reference to the accompanying drawings, wherein:
- Figure 1 shows a cross-section of a pressure-limiting valve subjected to the method according to the present invention;
- Figure 2 shows a flow chart of the present calibration method;
- Figure 3 illustrates the prior art; and
- Figure 4 illustrates a variant to the method according to the present invention.

### BEST MODE FOR CARRYING OUT THE INVENTION

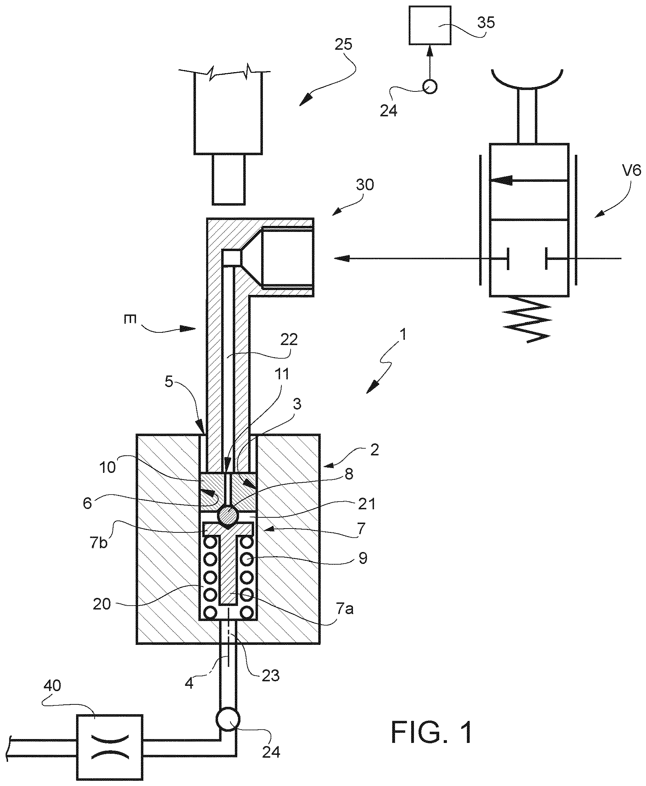

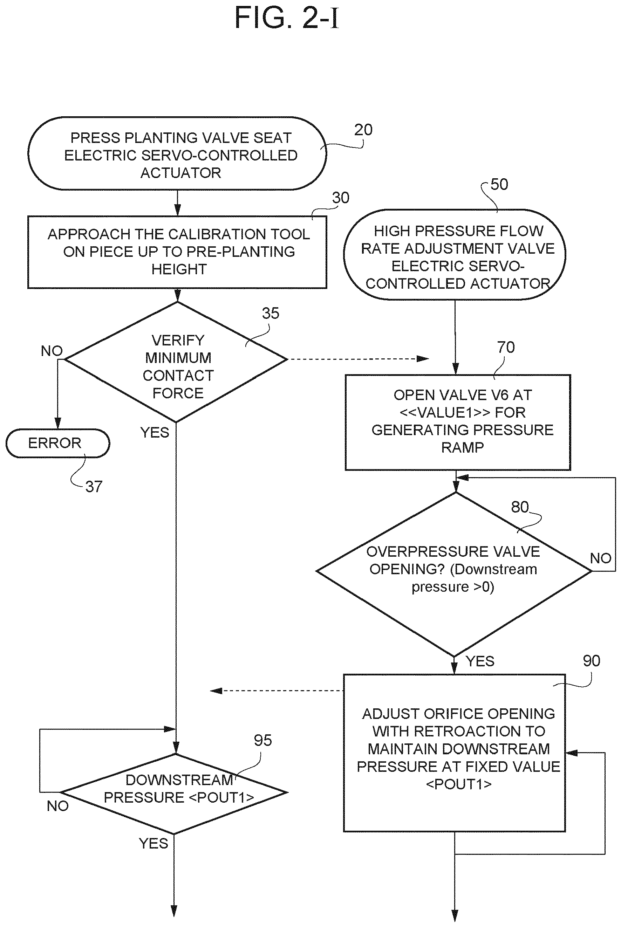

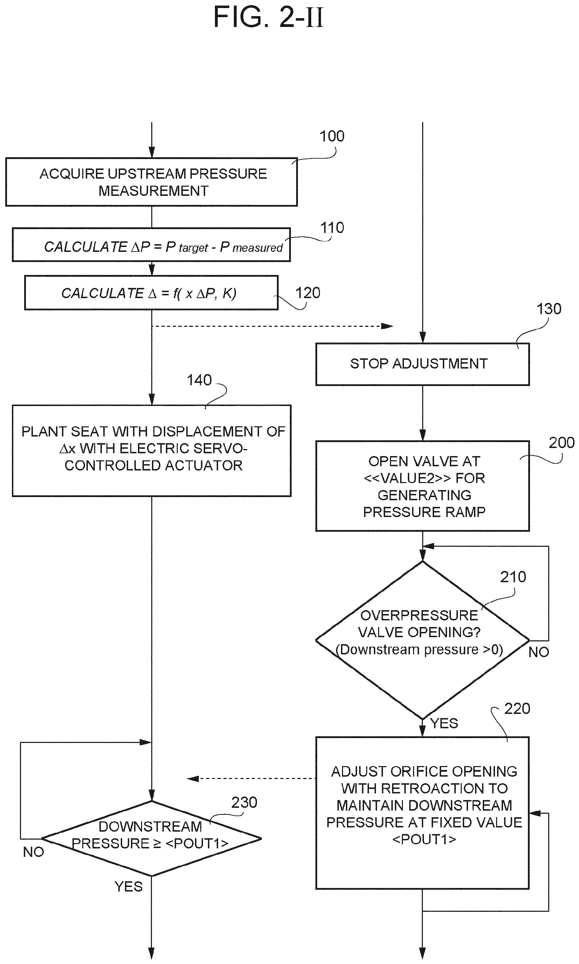

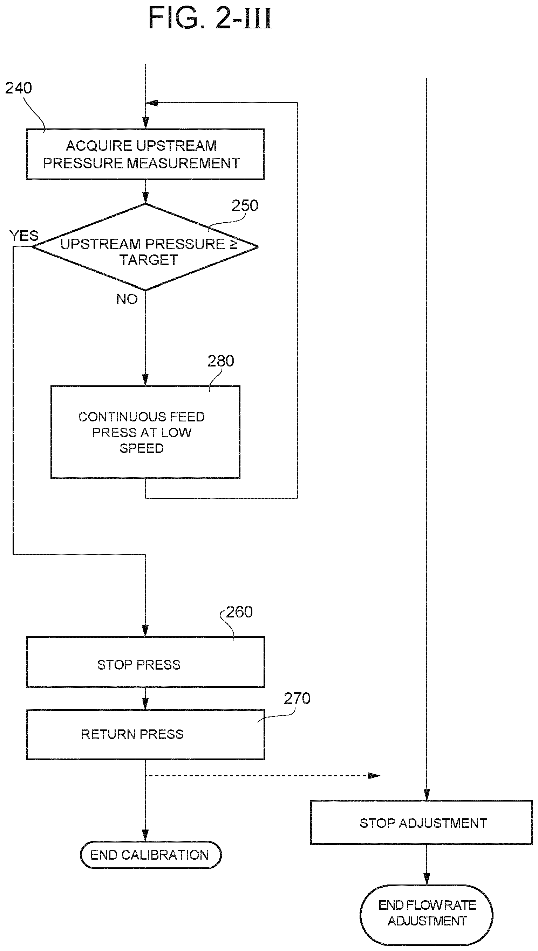

Figure 2 schematically shows the present calibration method applied to the valve 1 of Figure 1. In particular, the method is based on an iterative and adaptive algorithm, wherein it is possible to optimise the number of steps necessary for completing the calibration of the valve 1.

Specifically, the pressure-limiting valve 1, schematically illustrated in **Figure 1**, comprises a valve body 2, provided with a central cylindrical hole 3, extending along an axis 4. The central cylindrical hole 3 defines, at a first end thereof, an opening 5 and, at a second end, a valve seat 6; in particular, the valve seat 6 houses a movable element 7, which comprises an elongated portion 7a (needle) which is coaxial with the axis 4 and is provided at an enlarged end 7b thereof transverse to the axis 4 and facing the opening 5, with a recess, adapted to contain a ball 8 (for example, of steel).

The valve seat 6 further houses a spring 9, arranged coaxially with the axis 4 and provided with a first end, arranged in contact with a bottom wall of the valve seat 6, and with a second end, arranged in contact with the enlarged portion 7b of the movable element 7.

The valve 1 further comprises a cylindrical abutment seat 10, which is arranged in the central hole 3. The cylindrical abutment seat 10 has a central portion defining a channel 11 coaxial with the axis 4 and communicating at a first end thereof with an inlet 22 of the valve 1.

In use, in the closing position (Figure 1) of the valve, the ball 8 abuts on the seat 10 and closes a second end of the channel 11. The spring 9 exerts an elastic force which maintains, in the aforementioned closing condition of the valve, the ball 8 pressed against the cylindrical seat 10 thus closing the second end of the channel 11. The force exerted by the spring 9 depends on the position of the cylindrical abutment seat 10 along the axis 4 inside the hole 3. With the decrease in the distance between the seat 10 and the bottom wall of the valve seat 6, the spring is more compressed and the force increases according to the known relation F = k*x.

When the pressure of the fluid supplied from the inlet 22 of the valve to the channel 11 exceeds a threshold value, a force is applied to the ball 8, said force exceeding that exerted by the spring 9 which is compressed; in this manner, the ball 8 is displaced and moves away from the valve seat 10 and creating an annular space (not represented in Figure 1) for the passage of the fluid under pressure which flows through the valve 1.

The ball 8 separates the channel 11 from a chamber 20 housing the spring 9, the movable element 7 and the ball 8. The chamber 20 communicates with an outlet 23 of the valve and the channel 11, as illustrated above, communicates with an inlet 22 of the valve.

In order to carry out the calibration operations, according to the present invention the outlet 23 of the valve is connected with a narrowing device 40 (of known type) which produces a resistance to the discharge of the fluid which outflows from the outlet 23. Furthermore, a sensor 24 is used which measures the pressure in the chamber 20.

A calibration tool 25 of servo-controlled type is used, i.e. provided with a pusher element 30, movable along the axis 4 under the thrust of motor means (not represented of known type), which are controlled by an electronic control unit 35 operating according to the instructions of Figure 2 and communicating with the sensor 24.

At the beginning of the calibration process (Figure 1 illustrates an initial situation of the present valve 1), the calibration tool 25 is arranged above the valve 1 with the pusher element 30 motionless; the cylindrical abutment seat 10 is housed in the valve seat 6 and is spaced with respect to the ball 8. The enlarged portion of the movable element 7 is placed on the spring 9, which is in a rest position. Alternatively, the cylindrical abutment seat 10 can be previously pre-planted at a height such to load the spring 9 at an intermediate level and lock the ball 8 between the cylindrical abutment seat 10 and the movable element 7.

With reference to Figure 2, which illustrates the operations carried out under the control of the electronic unit 15, operating according to the present method, a **calibration cycle** is carried out, wherein an initial block 20 is provided which performs the displacement of the pusher element 30 with respect to the initial position; in particular, the pusher element 30 moves axially downwards, fed towards the bottom of the valve seat 6 of a pre-established distance (block 30) in order to reach a pre-planting height. The pusher element 30 abuts on the cylindrical abutment seat 10 (block 30) and moves it for an established distance until the abutment seat 10 abuts on the ball 8 which is arranged in a valve closing position closing the second end of the channel 11. In Figure 1, the pusher element 30 is a T-shaped element provided with a channel for the supply of fluid under pressure to the inlet 22 of the valve. A gas or a liquid can be supplied. The pusher element 30 thus has the function of moving the seat 10 and of supplying fluid under pressure to the inlet 22 of the valve. The motion of the pusher element 30 terminates. In this position it is necessary to verify that the cylindrical abutment seat 10 has sufficient interference with respect to the hole 5 so as to ensure that, eliminating the thrust exerted by the T-shaped element, it remains locked in position. For this purpose, it is verified that the force applied by the pusher element 30 is above a pre-established threshold (block "Verification minimum contact force", block 35). When the control of the block 35 produces a negative outcome, an error (block 37) is signalled and the procedure terminates.

Subsequent to the operations described in the blocks 30 and 35, the supply of the fluid under pressure is activated (block 50) with a preset opening value of a valve V6 (Figure 1) which supplies fluid under pressure to the inlet 22 of the valve 1 in order to obtain the detachment of the ball 8 from the seat 10 with respect to the closing position, the displacement of the movable element 7 against the action of the spring 9 and thus the opening of the valve 1.

Typically, the pressure of the fluid has a ramp increase (block 70).

The ball 8 thus starts moving and the fluid under pressure is supplied in the chamber 20. As soon as the forming of a back pressure in the chamber 20 is detected (block 80) caused by the fluid supplied at the inlet to the valve being calibrated (the back pressure is obtained narrowing the outlet 23 of the valve by means of the narrowing 40 thus limiting the outflow of the fluid) a first step of adjustment is activated.

In the first adjustment step (blocks 90 and 95) a control cycle is performed of the back pressure detected by the transducer 24 acting on the opening degree of the valve V6 in order to maintain the pressure in the chamber equal to an objective value P_{OUT1} (for example 1 bar) .

During the adjustment step, the supply pressure P_{measured} of the valve is acquired (block 100), such pressure is compared with a valve setting target pressure P_{target} calculating the pressure difference ΔP (block 110) and subsequently the displacement ΔX to be applied to the seat 10 is calculated in order to reduce the pressure difference ΔP (block 120) to a minimum value. With this calculation, the first adjustment step (block 130) terminates and the displacement of the pusher element 30 is performed so as to physically perform the movement ΔX of the seat 10 (block 140) .

A first open loop calibration phase thus terminates.

Subsequently, (second calibration phase in a closed loop) fluid under pressure is again supplied to the inlet of the valve (block 200 opening valve V6) until (block 210) in the chamber 20 a pressure is present caused by the fluid supplied at the inlet to the valve being calibrated and not completely discharged by the chamber 20 thanks to the narrowing device 40.

Following a positive verification in the block 210, a control cycle is again performed (blocks 220 and 230) with retroaction of the valve V6 in order to maintain the pressure in the chamber 20 equal to the objective value P_{OUT1} (for example 1 bar). A further step of adjustment is thus started.

In such further adjustment step:
the supply pressure P_{measured} of the valve is acquired (block 240),
the pusher 30 moves in continuous mode displacing the abutment seat 10;
the pressure P_{measured} is compared (block 250) with the valve setting target pressure P_{target} and when the pressure measured is equal to or greater than the target, the calibration phase ends (the block 260 controls the stopping of the pusher 30 and the block 270 controls the arrangement of the pusher 30 in a rest position).

When, instead, the pressure measured P_{measured} is below the target, the calibration phase continues (block 280) with the continuous feed at low speed of the pusher until the condition of the block 250 is satisfied.

The advantages of the present invention are those implied in the direct calibration, i.e. to have the possibility to calibrate in process the valve progressively displacing the abutment seat 10 which causes the loading of the reaction spring 9 and directly reading the opening pressure of the valve, i.e. of the size that characterises the valve. The capability of this method to produce and maintain a condition of stable balance in conditions of open valve, allows measuring the opening pressure in steady state.

In this manner, it is possible to calibrate the valve "in continuous" and not by subsequent approximations.

Another advantage is that of eliminating the violent hits that are generated between the ball and the abutment seat at the moment of the opening of the valve, since it is possible to prevent the instability of the ball typical of this type of valves thanks to the pressure present in the chamber 20.

The above-described method allows calibrating in a direct manner (controlling the opening pressure and not the force of the spring) the valve being opened.

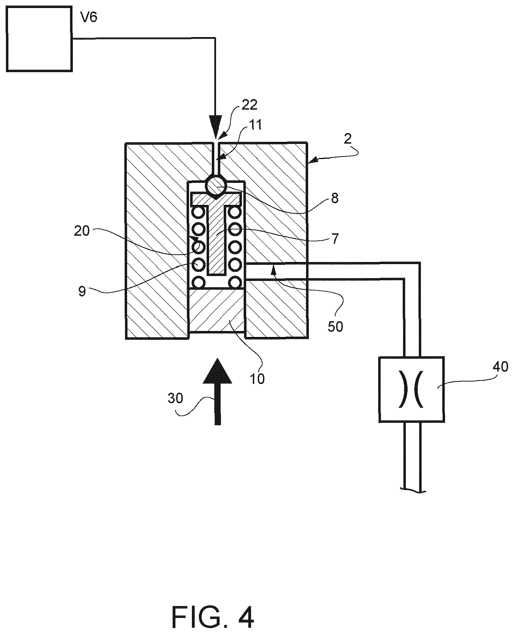

The method of the present invention is further applicable also in the alternative configuration of Figure 4 wherein the channel 11 is made in the valve body 2 with the ball 8 arranged in abutment on an end portion of the channel 11, the abutment seat 10 is devoid of the channel 11 and is arranged on the opposite side of the movable element 7 with respect to what represented in Figure 1, i.e. in abutment on a terminal portion of the spring 9.

The inlet of the channel 11 also embodies the inlet of the valve.

In this case, the pusher element 30 presses on the abutment seat 10 planting it inside the valve seat 6 and compresses the spring on an opposite side with respect to what illustrated in Figure 1.

The outlet of the chamber 20 is embodied by a channel 50 which radially extends from the chamber 20 and which communicates with the narrowing 40.

This type of valve configuration cannot be calibrated with the indirect method of the calibration of the spring pre-load force as this is not accessible.

## Claims

1. A calibration method of a valve (1), wherein a valve seat (6) houses a movable element (7) which extends along an axis (4), a spring (9) associated with the movable element (7) and a ball (8) carried by the movable element (7) and arranged, in use, in a closing position, in abutment against an abutment seat (10) housed in the valve seat (6) and provided with a channel (11) having a first end configured to be closed by the ball and a second end communicating with an inlet (22) of the valve;
the ball (8) separates the channel from a chamber (20) which houses the spring (9), the movable element (7) and the ball and communicates with an outlet (23) of the valve; said method using a calibration tool (25) , provided with a pusher element (30) movable, in use, along said axis (4),
the method comprising a **calibration** phase wherein the following steps are carried out:
- axially moving the pusher element (30) so that the pusher element (30) abuts on the abutment seat (10) and displaces it with respect to the valve seat (6) and subsequently stopping the motion of the pusher element (30);
- supplying fluid under pressure to the inlet (22) of the valve being calibrated;
- creating a narrowing (40) at the outlet (23) of the valve and measuring the pressure inside the chamber (20) detecting a pressure caused by the fluid supplied at the inlet to the valve being calibrated;
- carrying out an adjustment step for the flow of the fluid entering the valve wherein the pressure inside said chamber (20) is controlled so that it is close to a set fixed value (Pₒᵤₜ);
- acquiring (100) the supply pressure (Pₘᵢₛ) of the valve during the adjustment step;
- comparing the pressure (Pₘᵢₛ) with a valve setting target pressure (Ptarget) calculating (110) the pressure difference ΔP; and
calculating (120) the displacement (ΔX) to be applied to the seat (10) in order to reduce the pressure difference (ΔP) to a minimum value;
- controlling the displacement of the pusher element (30) to physically perform (140) the displacement (ΔX) of the seat (10) terminating the adjustment step (130).

2. The method according to claim 1, wherein the step of supplying fluid under pressure to the inlet (22) of the valve being calibrated comprises the step of opening a fluid supply valve (V6) communicating with said inlet (22) so that said fluid supply valve (V6) has a preset opening value;
said pressure adjustment step inside said chamber comprises the step of acting on the opening degree of the fluid supply valve (V6) in order to maintain the pressure in the chamber equal to the set fixed value.

3. The method according to claim 1 or 2, wherein, after said open loop calibration phase, a further calibration phase is carried out in closed loop.

4. - The method according to claim 3, wherein in the further calibration phase in a closed loop, fluid under pressure is again supplied to the inlet of the valve (200) until it is detected that the pressure present in the chamber (20) reaches the set fixed value;
said further adjustment step comprising:
acquiring (240) the supply pressure (P_{measured}) of the valve ;
controlling in continuous mode the movement of the pusher (30) to modify the position of the abutment seat (10) relative to the valve seat (6);
comparing (250) the pressure (P_{measured})with the valve setting target pressure (P_{target}) and terminating the calibration of the valve when the pressure measured is equal to or greater than the target;
continuing the calibration phase when the pressure measured (P_{measured}) is below the target actuating the continuous feed at low speed of the pusher until said comparison produces a positive outcome.

5. A calibration method of a valve (1), wherein a valve seat (6) houses a movable element (7) which extends along an axis (4), a spring (9) associated with the movable element (7) and a ball (8) carried by the movable element (7) and arranged, in use, in a closing position, in abutment on a first end of a channel having a second end communicating with an inlet (22) of the valve;
the ball (8) separates the channel from a chamber (20) which houses the spring (9), the movable element (7) and the ball and communicates with an outlet (23) of the valve;
said method using a calibration tool (25), provided with a pusher element (30) movable, in use, along said axis (4),
the method comprising a **calibration** phase wherein the following steps are carried out:
- axially moving the pusher element (30) so that the pusher element (30) abuts on an abutment seat (10) housed in the valve seat (6) and displaces it with respect to the valve seat (6) compressing the spring (9) and subsequently stopping the motion of the pusher element (30);
- supplying fluid under pressure to the inlet (22) of the valve being calibrated;
- creating a narrowing (40) at the outlet (23) of the valve and measuring the pressure inside the chamber (20) detecting a pressure caused by the fluid supplied at the inlet to the valve being calibrated;
- carrying out an adjustment step for the flow of the fluid entering the valve wherein the pressure inside said chamber (20) is controlled so that it is close to a set fixed value (Pₒᵤₜ);
- acquiring (100) the supply pressure (Pₘᵢₛ) of the valve during the adjustment step;
- comparing the pressure (Pₘᵢₛ) with a valve setting target pressure (P_{target}) calculating (110) the pressure difference (ΔP); and
calculating (120) the displacement (ΔX) to be applied to the seat (10) in order to reduce the pressure difference (ΔP) to a minimum value;
- controlling the displacement of the pusher element (30) to physically perform (140) the displacement (ΔX) of the seat (10) terminating the adjustment step (130).

6. The method according to claim 5, wherein the step of supplying fluid under pressure to the inlet (22) of the valve being calibrated comprises the step of opening a fluid supply valve (V6) communicating with said inlet (22) so that said fluid supply valve (V6) has a preset opening value;
said pressure adjustment step inside said chamber comprises the step of acting on the opening degree of the fluid supply valve (V6) in order to maintain the pressure in the chamber equal to the set fixed value.

7. The method according to claim 5 or 6, wherein after said open loop calibration phase, a further calibration phase is carried out in closed loop.

8. - The method according to claim 7, wherein in the further calibration phase in a closed loop, fluid under pressure is again supplied to the inlet of the valve (200) until it is detected that the pressure present in the chamber (20) reaches the set fixed value;
said further adjustment step comprising:
acquiring the supply pressure (P_{measured}) of the valve (240) ;
controlling in continuous mode the movement of the pusher (30) to modify the position of the abutment seat (10) relative to the valve seat (6);
comparing (250) the pressure (P_{measured}) with the valve setting target pressure (P_{target}) and terminating the calibration of the valve when the pressure measured is equal to or greater than the target;
- continuing the calibration phase when the pressure measured (P_{measured}) is below the target actuating the continuous feed at low speed of the pusher until said comparison produces a positive outcome.

## Patentansprüche

1. Verfahren zum Kalibrieren eines Ventils (1), wobei ein Ventilsitz (6) ein bewegliches Element (7), das sich entlang einer Achse (4) erstreckt, eine Feder (9), die mit dem beweglichen Element (7) verbunden ist, und eine Kugel (8) beherbergt, die von dem beweglichen Element (7) getragen wird und im Gebrauch in einer Schließposition in Auflage gegen einen Auflagesitz (10) angeordnet ist, der im Ventilsitz (6) untergebracht ist und mit einem Kanal (11) versehen ist, der ein erstes Ende, das konfiguriert ist, durch die Kugel geschlossen zu werden, und ein zweites Ende aufweist, das mit einem Einlass (22) des Ventils in Verbindung steht;
die Kugel (8) den Kanal von einer Kammer (20) trennt, die die Feder (9), das bewegliche Element (7) und die Kugel beherbergt und mit einem Auslass (23) des Ventils in Verbindung steht;
wobei das Verfahren ein Kalibrierungswerkzeug (25) verwendet, das mit einem Schubelement (30) versehen ist, das im Gebrauch entlang der Achse (4) beweglich ist,
wobei das Verfahren eine Kalibrierungsphase aufweist, in der die folgenden Schritte ausgeführt werden:
- axiales Bewegen des Schubelements (30), so dass das Schubelement (30) auf dem Auflagesitz (10) aufliegt und ihn in Bezug auf den Ventilsitz (6) verschiebt, und anschließendes Anhalten der Bewegung des Schubelements (30);
- Zuführen von Fluid unter Druck zum Einlass (22) des Ventils, das kalibriert wird;
- Erzeugen einer Verengung (40) am Auslass (23) des Ventils und Messen des Drucks im Inneren der Kammer (20), wobei ein Druck erfasst wird, der durch das Fluid verursacht wird, das am Einlass des Ventils zugeführt wird, das kalibriert wird;
- Ausführen eines Einstellschritts für den Durchfluss des in das Ventil eintretenden Fluids, bei dem der Druck im Inneren der Kammer (20) so gesteuert wird, dass er nahe an einem festgelegten festen Wert (Pₒᵤₜ) liegt;
- Erfassen (100) des Zufuhrdrucks (Pₘᵢₛ) des Ventils während des Einstellschritts;
- Vergleichen des Drucks (Pₘᵢₛ) mit einem Ventileinstellungs-Zieldruck (P_{target}), wobei die Druckdifferenz ΔP berechnet wird (110); und
Berechnen (120) der Verschiebung (ΔX), die auf den Sitz (10) ausgeübt werden soll, um die Druckdifferenz (ΔP) auf einen Minimalwert zu reduzieren;
Steuern der Verschiebung des Schubelements (30), um die Verschiebung (ΔX) des Sitzes (10) physikalisch durchzuführen (140), wobei der Einstellschritt (130) beendet wird.

2. Verfahren nach Anspruch 1, wobei der Schritt des Zuführens von Fluid unter Druck zum Einlass (22) des Ventils, das kalibriert wird, den Schritt des Öffnens eines Fluidzufuhrventils (V6) aufweist, das mit dem Einlass (22) in Verbindung steht, so dass das Fluidzufuhrventil (V6) einen voreingestellten Öffnungswert aufweist;
der Druckeinstellschritt innerhalb der Kammer den Schritt aufweist, auf den Öffnungsgrad des Fluidzufuhrventils (V6) einzuwirken, um den Druck in der Kammer gleich dem festgelegten festen Wert zu halten.

3. Verfahren nach Anspruch 1 oder 2, wobei nach der Kalibrierungsphase im offenen Regelkreis eine weitere Kalibrierungsphase im geschlossenen Regelkreis durchgeführt wird.

4. Verfahren nach Anspruch 3, wobei in der weiteren Kalibrierungsphase in einem geschlossenen Regelkreis dem Einlass des Ventils (200) erneut Fluid unter Druck zugeführt wird, bis festgestellt wird, dass der in der Kammer (20) vorhandene Druck den festgelegten festen Wert erreicht;
wobei der weitere Einstellschritt aufweist:
Erfassen (240) des Zufuhrdrucks (P_{measured}) des Ventils;
Steuern der Bewegung des Schubelements (30) in einem kontinuierlichen Modus, um die Position des Auflagesitzes (10) relativ zum Ventilsitz (6) zu verändern;
Vergleichen (250) des Drucks (P_{measured}) mit dem Ventileinstellungs-Zieldruck (Ptarget) und Beenden der Kalibrierung des Ventils, wenn der gemessene Druck gleich oder größer als das Ziel ist;
Fortsetzung der Kalibrierungsphase, wenn der gemessene Druck (P_{measured}) unter dem Ziel liegt, wobei der kontinuierliche Vorschub bei niedriger Geschwindigkeit des Schubelements betätigt wird, bis der Vergleich ein positives Ergebnis liefert.

5. Verfahren zum Kalibrieren eines Ventils (1), wobei ein Ventilsitz (6) ein bewegliches Element (7), das sich entlang einer Achse (4) erstreckt, eine Feder (9), die mit dem beweglichen Element (7) verbunden ist, und eine Kugel (8) beherbergt, die von dem beweglichen Element (7) getragen wird, die im Gebrauch in einer Schließposition in Auflage an einem ersten Ende eines Kanals angeordnet ist, der ein zweites Ende aufweist, das mit einem Einlass (22) des Ventils in Verbindung steht;
die Kugel (8) den Kanal von einer Kammer (20) trennt, die die Feder (9), das bewegliche Element (7) und die Kugel beherbergt und mit einem Auslass (23) des Ventils in Verbindung steht;
wobei das Verfahren ein Kalibrierungswerkzeug (25) verwendet, das mit einem Schubelement (30) versehen ist, das im Gebrauch entlang der Achse (4) beweglich ist,
wobei das Verfahren eine Kalibrierungsphase aufweist, in der die folgenden Schritte ausgeführt werden:
- axiales Bewegen des Schubelements (30), so dass das Schubelement (30) an einem Auflagesitz (10) aufliegt, der im Ventilsitz (6) untergebracht ist, und ihn in Bezug auf den Ventilsitz (6) verschiebt, wobei die Feder (9) zusammengedrückt und anschließend die Bewegung des Schubelements (30) gestoppt wird;
- Zuführen von Fluid unter Druck zum Einlass (22) des Ventils, das kalibriert wird;
- Erzeugen einer Verengung (40) am Auslass (23) des Ventils und Messen des Drucks in der Kammer (20) wobei ein Druck erfasst wird, der durch das Fluid verursacht wird, das am Einlass dem Ventil zugeführt wird, das kalibriert wird;
Ausführen eines Einstellschritts für den Durchfluss des in das Ventil eintretenden Fluids, wobei der Druck im Inneren der Kammer (20) so gesteuert wird, dass er nahe an einem festgelegten festen Wert (Pₒᵤₜ) liegt;
- Erfassen (100) des Zufuhrdrucks (Pₘᵢₛ) des Ventils während des Einstellschritts;
- Vergleichen des Drucks (Pₘᵢₛ) mit einem Ventileinstellungs-Zieldruck (P_{target}), wobei die Druckdifferenz (ΔP) berechnet wird (110); und
Berechnen (120) der Verschiebung (ΔX), die auf den Sitz (10) ausgeübt werden soll, um die Druckdifferenz (ΔP) auf einen Minimalwert zu reduzieren;
Steuern der Verschiebung des Schubelements (30), um die Verschiebung (ΔX) des Sitzes (10) physisch durchzuführen (140), wobei der Einstellschritt (130) beendet wird.

6. Verfahren nach Anspruch 5, wobei der Schritt des Zuführens von Fluid unter Druck zum Einlass (22) des Ventils, das kalibriert wird, den Schritt des Öffnens eines Fluidzufuhrventils (V6) aufweist, das mit dem Einlass (22) in Verbindung steht, so dass das Fluidzufuhrventil (V6) einen voreingestellten Öffnungswert aufweist;
der Druckeinstellschritt im Inneren der Kammer den Schritt aufweist, auf den Öffnungsgrad des Fluidzufuhrventils (V6) einzuwirken, um den Druck in der Kammer gleich dem festgelegten festen Wert zu halten.

7. Verfahren nach Anspruch 5 oder 6, wobei nach der Kalibrierungsphase im offenen Regelkreis eine weitere Kalibrierungsphase im geschlossenen Regelkreis durchgeführt wird.

8. Verfahren nach Anspruch 7, wobei in der weiteren Kalibrierungsphase in einem geschlossenen Regelkreis dem Einlass des Ventils (200) erneut Fluid unter Druck zugeführt wird, bis festgestellt wird, dass der in der Kammer (20) herrschende Druck den festgelegten festen Wert erreicht;
wobei der weitere Einstellschritt aufweist:
Erfassen des Zufuhrdrucks (P_{measured}) des Ventils (240);
Steuern der Bewegung des Schubelements (30) im kontinuierlichen Modus, um die Position des Auflagesitzes (10) relativ zum Ventilsitz (6) zu verändern;
Vergleichen (250) des Drucks (P_{measured}) mit dem Ventileinstellungs-Zieldruck (Ptarget) und Beenden der Kalibrierung des Ventils, wenn der gemessene Druck gleich oder größer als das Ziel ist;
- Fortsetzen der Kalibrierungsphase, wenn der gemessene Druck (P_{measured}) unter dem Ziel liegt, wobei der kontinuierliche Vorschub bei niedriger Geschwindigkeit des Schubelements betätigt wird, bis der Vergleich ein positives Ergebnis liefert.

## Revendications

1. Méthode d'étalonnage d'une soupape (1), dans laquelle un siège de soupape (6) loge un élément mobile (7) qui s'étend le long d'un axe (4), un ressort (9) associé à l'élément mobile (7) et une bille (8) portée par l'élément mobile (7) et agencée, lors de l'utilisation, dans une position fermée, en butée contre un siège (10) de butée logé dans le siège de soupape (6) et doté d'un canal (11) ayant une première extrémité configurée pour être fermée par la bille et une seconde extrémité communiquant avec une entrée (22) de la soupape ;
la bille (8) sépare le canal d'une chambre (20) qui loge le ressort (9), l'élément mobile (7) et la bille et communique avec une sortie (23) de la soupape ;
ladite méthode utilisant un outil d'étalonnage (25) doté d'un élément poussoir (30) mobile, lors de l'utilisation, le long dudit axe (4),
la méthode comprenant une phase d'étalonnage dans laquelle les étapes suivantes sont réalisées :
- le déplacement axial de l'élément poussoir (30) de sorte que l'élément poussoir (30) vienne en butée sur le siège (10) de butée et le déplace par rapport au siège de soupape (6) et ensuite l'arrêt du mouvement de l'élément poussoir (30) ;
- la fourniture d'un fluide sous pression à l'entrée (2) de la soupape en cours d'étalonnage ;
- la création d'un rétrécissement (40) au niveau de la sortie (23) de la soupape et la mesure de la pression à l'intérieur de la chambre (20) en détectant une pression causée par le fluide fourni au niveau de l'entrée à la valve en cours d'étalonnage ;
- la réalisation d'une étape de réglage du flux du fluide entrant dans la soupape dans laquelle la pression à l'intérieur de ladite chambre (20) est commandée de sorte qu'elle soit proche d'une valeur fixe déterminée (Pₒᵤₜ) ;
- l'acquisition (100) de la pression (Pₘᵢₛ) de fourniture de la soupape pendant l'étape de réglage ;
- la comparaison de la pression (Pₘᵢₛ) avec une pression cible de réglage de soupape (Pcible) en calculant (110) la différence de pression ΔP ; et le calcul (120) du déplacement (ΔX) à appliquer au siège (10) pour réduire la différence de pression (ΔP) à une valeur minimale ;
- la commande du déplacement de l'élément poussoir (30) pour effectuer (140) physiquement le déplacement (ΔX) du siège (10) terminant l'étape de réglage (130).

2. Méthode selon la revendication 1, dans laquelle l'étape de fourniture d'un fluide sous pression à l'entrée (22) de la soupape en cours d'étalonnage comprend l'étape d'ouverture d'une soupape de fourniture de fluide (V6) communiquant avec ladite entrée (22) de sorte que ladite soupape de fourniture de fluide (V6) ait une valeur d'ouverture prédéterminée ;
ladite étape de réglage de pression à l'intérieur de ladite chambre comprend l'étape d'action sur le degré d'ouverture de la soupape de fourniture de fluide (V6) pour maintenir la pression dans la chambre égale à la valeur fixe déterminée.

3. Méthode selon la revendication 1 ou 2, dans laquelle, après ladite phase d'étalonnage en boucle ouverte, une phase d'étalonnage supplémentaire est réalisée en boucle fermée.

4. Méthode selon la revendication 3, dans laquelle dans la phase d'étalonnage supplémentaire en boucle fermée, un fluide sous pression est à nouveau fourni à l'entrée de la soupape (200) jusqu'à ce qu'il soit détecté que la pression présente dans la chambre (20) atteint la valeur fixe déterminée ;
ladite étape de réglage supplémentaire comprenant :
l'acquisition (240) de la pression (P_{mesurée}) de fourniture de la soupape ;
la commande en mode continu du mouvement du poussoir (30) pour modifier la position du siège (10) de butée par rapport au siège de soupape (6) ;
la comparaison (250) de la pression (P_{mesurée}) avec la pression cible de réglage de soupape (P_{cible}) et la terminaison de l'étalonnage de la soupape lorsque la pression mesurée est égale ou supérieure à la cible ;
la poursuite de la phase d'étalonnage lorsque la pression (P_{mesurée}) mesurée est sous la cible en actionnant l'alimentation continue à faible vitesse du poussoir jusqu'à ce que ladite comparaison produise un résultat positif.

5. Méthode d'étalonnage d'une soupape (1), dans laquelle un siège de soupape (6) loge un élément mobile (7) qui s'étend le long d'un axe (4), un ressort (9) associé à l'élément mobile (7) et une bille (8) portée par l'élément mobile (7) et agencée, lors de l'utilisation, dans une position fermée, en butée sur une première extrémité d'un canal ayant une seconde extrémité communiquant avec une entrée (22) de la soupape ;
la bille (8) sépare le canal d'une chambre (20) qui loge le ressort (9), l'élément mobile (7) et la bille et communique avec une sortie (23) de la soupape ;
ladite méthode utilisant un outil d'étalonnage (25), doté d'un élément poussoir (30) mobile, lors de l'utilisation, le long dudit axe (4),
la méthode comprenant une phase d'étalonnage dans laquelle les étapes suivantes sont réalisées :
- le déplacement axial de l'élément poussoir (30) de sorte que l'élément poussoir (30) vienne en butée sur le siège (10) de butée logé dans le siège de soupape (6) et le déplace par rapport au siège de soupape (6) en comprimant le ressort (9) et ensuite l'arrêt du mouvement de l'élément poussoir (30) ;
- la fourniture d'un fluide sous pression à l'entrée (22) de la soupape en cours d'étalonnage ;
- la création d'un rétrécissement (40) au niveau de la sortie (23) de la soupape et la mesure de la pression à l'intérieur de la chambre (20) en détectant une pression causée par le fluide fourni au niveau de l'entrée à la valve en cours d'étalonnage ;
- la réalisation d'une étape de réglage du flux du fluide entrant dans la soupape dans laquelle la pression à l'intérieur de ladite chambre (20) est commandée de sorte qu'elle soit proche d'une valeur fixe déterminée (Pₒᵤₜ) ;
- l'acquisition (100) de la pression (Pₘᵢₛ) de fourniture de la soupape pendant l'étape de réglage ;
- la comparaison de la pression (Pₘᵢₛ) avec une pression cible de réglage de soupape (P_{cibie}) en calculant (110) la différence de pression (ΔP) ; et le calcul (120) du déplacement (ΔX) à appliquer au siège (10) pour réduire la différence de pression (ΔP) à une valeur minimale ;
- la commande du déplacement de l'élément poussoir (30) pour effectuer (140) physiquement le déplacement (ΔX) du siège (10) terminant l'étape de réglage (130).

6. Méthode selon la revendication 5, dans laquelle l'étape de fourniture d'un fluide sous pression à l'entrée (22) de la soupape en cours d'étalonnage comprend l'étape d'ouverture d'une soupape de fourniture de fluide (V6) communiquant avec ladite entrée (22) de sorte que ladite soupape de fourniture de fluide (V6) ait une valeur d'ouverture prédéterminée ;
ladite étape de réglage de pression à l'intérieur de ladite chambre comprend l'étape d'action sur le degré d'ouverture de la soupape de fourniture de fluide (V6) pour maintenir la pression dans la chambre égale à la valeur fixe déterminée.

7. Méthode selon la revendication 5 ou 6, dans laquelle, après ladite phase d'étalonnage en boucle ouverte, une phase d'étalonnage supplémentaire est réalisée en boucle fermée.

8. Méthode selon la revendication 7, dans laquelle dans la phase d'étalonnage supplémentaire en boucle fermée, un fluide sous pression est à nouveau fourni à l'entrée de la soupape (200) jusqu'à ce qu'il soit détecté que la pression présente dans la chambre (20) atteint la valeur fixe déterminée ;
ladite étape de réglage supplémentaire comprenant :
l'acquisition de la pression (P_{mesurée}) de fourniture de la soupape (240) ;
la commande en mode continu du mouvement du poussoir (30) pour modifier la position du siège (10) de butée par rapport au siège de soupape (6) ;
la comparaison (250) de la pression (P_{mesurée}) avec la pression cible de réglage de soupape (P_{cible}) et la terminaison de l'étalonnage de la soupape lorsque la pression mesurée est égale ou supérieure à la cible ;
la poursuite de la phase d'étalonnage lorsque la pression (P_{mesurée}) mesurée est sous la cible en actionnant l'alimentation continue à faible vitesse du poussoir jusqu'à ce que ladite comparaison produise un résultat positif.
